# DEMANDE DE BREVET EUROPEEN

(11) **EP 1 211 288 A1**
(43) Date de publication de la demande: **05.06.2002**
(21) Numéro de dépôt: 01402936.7
(22) Date de dépôt: 15.11.2001
(51) Int. Cl.: C08L 27/16, C08K 3/04

(54) **Composition conductrice à base de polymère fluoré**

(30) Priorité: 01.12.2000 FR 0015591
(71) Demandeur: Atofina, 92800 Puteaux (FR)
(72) Inventeur: Bonnet, Anthony, 27470 Serquigny (FR); Court, Francois, 27470 Fontaine-L'Abbe (FR); Leibler, Ludwik, 75016 Paris (FR)
(74) Mandataire: Neel, Henry

(57) **Abrégé**

La présente invention concerne une composition conductrice comprenant (i) un polymère fluoré, (ii) un produit électroconducteur et (iii) un copolymère tribloc ABC, les trois blocs A, B, et C étant reliés entre eux dans cet ordre, chaque bloc étant soit un homopolymère soit un copolymère obtenu à partir de deux ou plusieurs monomères, le bloc A étant relié au bloc B et le bloc B au bloc C au moyen d'une liaison covalente ou d'une molécule intermédiaire reliée à l'un de ces blocs par une liaison covalente et à l'autre bloc par une autre liaison covalente, et tel que :
- le bloc A est compatible avec le polymère fluoré,
- le bloc B est incompatible avec le polymère fluoré et est incompatible avec le bloc A,
- le bloc C est incompatible avec le polymère fluoré, le bloc A et le bloc B.

L'invention concerne aussi les pièces fabriquées avec la composition ci-dessus. Ces pièces peuvent être des plaques, des films, des tubes, des joncs, des éléments de pompes centrifuges et des conteneurs.

## Description

### [Domaine de l'invention]

La présente invention concerne une composition conductrice à base de polymère fluoré. Les polymères fluorés tels que par exemple le PVDF (polyfluorure de vinylidène) sont connus pour leur résistance à de nombreux produits et sont donc utilisés dans des applications dans lesquelles ils sont en contact avec des fluides agressifs chimiquement comme les solvants, les essences, les acides et les bases. Ainsi on réalise des plaques, des pièces, des fils, des tubes, des raccords, des conteneurs, des revêtements de colonnes à distiller ou de pompes pouvant être en contact ou immergés dans ces fluides. La circulation de certains fluides au contact de ces pièces en polymère fluoré peut générer des charges électrostatiques, d'autres pièces doivent être mises à la terre, ainsi il est nécessaire de rendre ces pièces conductrices de l'électricité.

### [L'art antérieur et le problème technique]

Le frottement d'un solvant sur une pièce en PVDF peut générer des charges électrostatiques, dont l'accumulation peut conduire à une décharge électrique (étincelle) capable d'enflammer le solvant avec des conséquences catastrophiques (explosion). Aussi, est-il nécessaire de rendre ces pièces conductrices.

Il est connu d'abaisser la résistivité superficielle de résines ou matériaux polymériques en leur incorporant des matériaux conducteurs et/ou semiconducteurs tels que le noir de carbone, les fibres en acier, les fibres de carbone, les particules (fibres, plaquettes, sphères) métallisées avec de l'or, de l'argent ou du nickel. Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charges augmente, la viscosité du mélange polymère / charge augmente. De même, lorsque le taux de charge augmente, le module de flexion du polymère chargé augmente et sa résistance au choc diminue. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section II pour les charges en général et le chapitre 16, Section VI pour le noir de carbone en particulier.

Quant aux propriétés électriques du noir de carbone, le bulletin technique "Ketjenblack EC - BLACK 94/01" de la société AKZO NOBEL indique que la résistivité de la formulation chute très brutalement lorsqu'un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound.

Le PVDF a un comportement fragile en choc multiaxial. L'addition d'un agent permettant de le rendre électroconducteur comme un noir de carbone va le rendre encore plus fragile. Les différentes façon d'améliorer les propriétés de résistance au choc supposent la plupart du temps l'incorporation de phases élastomériques molles qui peuvent présenter des morphologies de types « core-shell » dans une matrice PVDF. L'inconvénient majeur d'une telle association est une forte diminution de la résistance chimique.

Le but de la présente invention est d'obtenir une composition à base de polymère fluoré contenant un agent permettant de le rendre électro-conducteur tout en conservant la résistance chimique, tout en conservant un module élevé et présentant un choc au moins équivalent à la matrice PVDF seule, et qui peut être facilement mise en oeuvre.

La demande internationale WO 9929772 décrit le renforcement de PVDF par un copolymère tribloc poly(styrène)-poly(butadiène)-poly(méthacrylate de méthyle). Le PVDF ainsi modifié conserve ses propriétés de résistance chimique. Il n'est rien écrit sur l'incorporation de noir de carbone pour rendre ce PVDF conducteur.

On a maintenant trouvé qu'en ajoutant un copolymère tribloc du type poly(styrène)-poly(butadiène)-poly(méthacrylate de méthyle) et un produit électroconducteur dans un polymère fluoré on obtenait un polymère conducteur qui conserve la résistance chimique du polymère fluoré, a un module élevé, présente une très bonne résistance au choc et qui peut être être facilement mis en oeuvre.

### [Brève description de l'invention]

La présente invention concerne une composition conductrice comprenant (i) un polymère fluoré, (ii) un produit électroconducteur et (iii) un copolymère tribloc ABC, les trois blocs A, B, et C étant reliés entre eux dans cet ordre, chaque bloc étant soit un homopolymère soit un copolymère obtenu à partir de deux ou plusieurs monomères, le bloc A étant relié au bloc B et le bloc B au bloc C au moyen d'une liaison covalente ou d'une molécule intermédiaire reliée à l'un de ces blocs par une liaison covalente et à l'autre bloc par une autre liaison covalente, et tel que :
- le bloc A est compatible avec le polymère fluoré,
- le bloc B est incompatible avec le polymère fluoré et est incompatible avec le bloc A,
- le bloc C est incompatible avec le polymère fluoré, le bloc A et le bloc B.

L'invention concerne aussi les pièces fabriquées avec la composition ci-dessus. Ces pièces peuvent être des plaques, des films, des tubes, des joncs, des éléments de pompes centrifuges et des conteneurs.

### [Description détaillée de l'invention]

**S'agissant du polymère fluoré** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VF2); le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene.

Le polymère fluoré peut être un homopolymère ou un copolymère, il peut aussi comprendre des monomères non fluorés tels que l'éthylène.

Avantageusement, le polymère fluoré est choisi parmi :
- Les homo- et copolymères du fluorure de vinylidène (VF2) contenant de préférence au moins 50% en poids de VF2, le copolymère étant choisi parmi le chlorotrifluoroéthylène (CTFE), l'hexafluoropropylène (HFP), le trifluoroéthylène (VF3) et le tétrafluoroéthylène (TFE),
- Les homo- et copolymères du trifluoroéthylène (VF3),
- Les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.

De préférence, le polymère fluoré est du poly(fluorure de vinylidène) (PVDF) homopolymère. Avantageusement, le PVDF a une viscosité allant de 100 Pa.s à 2000 Pa.s, la viscosité étant mesurése à 230°C, à un gradient de cisaillement de 100 s⁻¹ à l'aide d'un rhéomètre capillaire. En effet, ces PVDF sont bien adaptés à l'extrusion et a l'injection. De préférence, le PVDF a une viscosité allant de 300 Pa.s à 1200 Pa.s, la viscosité étant mesurée à 230°C, à un gradient de cisaillement de 100s⁻¹ à l'aide d'un rhéomètre capillaire.

Ainsi, les PVDF commercialisés sous la marque KYNAR® 710 ou 720 sont parfaitement adaptés pour cette formulation.

**S'agissant du produit électroconducteur** ce sont tous les conducteurs de l'électricité. On peut citer à titre d'exemple les métaux et les produits à base de carbone. A titre d'exemple de produits à base de carbone on peut citer le graphite, le noir de carbone, les nanotubes de carbone et les fibres de carbone. On ne sortirait pas du cadre de l'invention en utilisant plusieurs éléments électroconducteurs. Les produits à base de carbone pouvant être utilisés sont décrits dans Handbook of fillers 2^{nd} Edition published by Chem Tec Publishing 1999 page 62 § 2.1.22, page 92 § 2.1.33 et page 184 § 2.2.2.

Avantageusement le produit électroconducteur est choisi parmi les noirs de carbone: Les noirs de carbone, peuvent être des noirs semi-conducteurs, conducteurs, ces noirs de carbone, présentent une surface BET faible. Parmi les noirs de carbone utilisables, ceux de la société MMM Carbon sont particulièrement satisfaisants. On retiendra particulièrement les noirs dont la surface d'adsorption azote est inférieure à 500 m²/g. Avantageusement ces noirs de carbone présentent une surface d'adsorption azote inférieure à 100 m²/g. Parmi ces différents types l'ENSACO® 250 convient particulièrement à l'application.

**S'agissant du copolymère tribloc ABC** Le copolymère à blocs comportant au moins trois blocs A, B et C est tel que le bloc A est relié au bloc B et le bloc B au bloc C au moyen d'une ou plusieurs liaisons simples covalentes. Dans le cas de plusieurs liaisons covalentes, entre le bloc A et le bloc B et/ou entre le bloc B et le bloc C, il peut y avoir un seul motif ou un enchaînement de motifs servant à joindre les blocs entre eux. Dans le cas d'un seul motif, ce dernier peut provenir d'un monomère dit modérateur utilisé dans la synthèse du tribloc. Dans le cas d'un enchaînement de motifs, celui-ci peut être un oligomère résultant d'un enchaînement d'unités monomères d'au moins deux monomères différents dans-un ordre alterné ou aléatoire. Un tel oligomère peut relier le bloc A au bloc B et le même oligomère ou un oligomère différent peut relier le bloc B au bloc C.

le bloc A d'un copolymère ABC est considéré comme compatible avec le polymère fluoré si le polymère A identique à ce bloc (donc sans séquences B et C) est compatible avec cette résine à l'état fondu. De même, les blocs A et B sont considérés comme incompatibles si les polymères A et B identiques à ces blocs sont incompatibles. D'une manière générale, par compatibilité entre deux polymères, on entend l'aptitude de l'un à se dissoudre dans l'autre à l'état fondu ou bien leur miscibilité totale. Dans le cas contraire les polymères ou blocs sont dits incompatibles.

Plus l'enthalpie de mélange de deux polymères est faible, plus grande est leur compatibilité. Dans certains cas, il y a une interaction spécifique favorable entre les monomères qui se traduit par une enthalpie de mélange négative pour les polymères correspondants. Dans le cadre de la présente invention, on préfère mettre en oeuvre des polymères compatibles dont l'enthalpie de mélange est négative ou nulle.

L'enthalpie de mélange ne peut cependant pas être mesurée de manière classique pour tous les polymères, et donc la compatibilité ne peut qu'être déterminée de manière indirecte, par exemple par des mesures d'analyse viscoélastique en torsion ou en oscillation ou encore par analyse calorimétrique différentielle. Pour des polymères compatibles, on peut détecter 2 Tg pour le mélange : l'une au moins des deux Tg est différente des Tg des composés purs et se situe dans la plage de températures comprise entre les deux Tg des composés purs. Le mélange de deux polymères totalement miscibles présente une seule Tg.

D'autres méthodes expérimentales peuvent être utilisées pour mettre en évidence la compatibilité des polymères, telles que mesures de turbidité, mesures de diffusion de la lumière, mesures infrarouge (L. A Utracki, Polymer Alloys and Blends, pp 64-117).

Des polymères miscibles ou compatibles sont répertoriés dans la littérature, voir par exemple J. Brandrup and E.H. Immergut : Polymer Handbook, 3rd Edition, Wiley & Sons 1979, New York 1989, pp. VI/348 à VI/364 ; O. Olabisi, L. M. Robeson and M. T. Shaw : Polymer Miscibility, Academic Press, New York 1979, pp. 215-276 ; L.A. Utracki : Polymer Alloys and Blends, Hanser Verlag, Münich 1989. Les listes figurant dans ces références sont données à titre illustratif et ne sont, bien entendu, pas exhaustives.

Avantageusement le bloc A est choisi parmi les homo- et copolymères d'(alkyl)acrylate d'alkyle et par exemple de méthacrylate de méthyle (MAM) et/ou d'acrylate de méthyle ou d'éthyle et/ou celles dérivant d'acétate de vinyle. Avantageusement, le bloc A est du Poly(méthacrylate de méthyle) (PMMA). De préférence, ce PMMA est syndiotactique et sa température de transition vitreuse Tg_{(A)}, mesurée par analyse thermique différentielle, est de +120°C à +140°C.

Avantageusement la Tg de B est inférieure à 0°C et de préférence inférieure à - 40°C.

Le monomère utilisé pour synthétiser le bloc B élastomérique peut être un diène choisi parmi le butadiène, l'isoprène, le 2,3-diméthyl-1,3-butadiène, le 1,3-pentadiène, le 2-phényl-1,3-butadiène. B est choisi avantageusement parmi les poly(diènes) notamment poly(butadiène), poly(isoprène) et leurs copolymères statistiques, ou encore parmi les poly(diènes) partiellement ou totalement hydrogénés. Parmi les polybutadiènes on utilise avantageusement ceux dont la Tg est la plus faible, par exemple le polybutadiène-1,4 de Tg ( vers -90° C) inférieure à celle du polybutadiène-1,2. (vers 0° C). Les blocs B peuvent aussi être hydrogènés. On effectue cette hydrogénation selon les techniques habituelles.

Le monomère utilisé pour synthétiser le bloc B élastomérique peut être aussi un (meth)acrylate d'alkyle, on obtient les Tg suivantes entre parenthèses suivant le nom de l'acrylate: l'acrylate d'éthyle (-24°C), l'acrylate de butyle, (- 54°C), l'acrylate de 2-éthylhexyle (-85°C), l'acrylate d'hydroxyéthyle (-15°C) et le méthacrylate de 2-éthylhexyle (-10°C). On utilise avantageusement l'acrylate de butyle. Les acrylates sont différents de ceux du bloc A pour respecter la condition de B et A incompatibles.

De préférence les blocs B sont constitués en majorité de polybutadiène-1,4.

De préférence, le bloc C a une température de transition vitreuse Tg_{(C)} ou une température de fusion Tf_{(C)} supérieure à la Tg_{(B)} du bloc B. Cette caractéristique confère la possibilité que le bloc C soit à l'état vitreux ou soit dans un état partiellement cristallin et le bloc B à l'état élastomérique, pour une même température d'utilisation Tp.

D'après la présente invention, il est possible de choisir la nature des blocs B pour avoir une certaine Tg_{(B)} déterminée et ainsi, à la température d'utilisation Tp du matériau ou de l'objet formé à partir du mélange, d'avoir un état élastomérique ou souple de ces polymères blocs B. Par contre, les polymères blocs C pouvant avoir une Tg_{(C)} ou une Tf supérieure à la Tg_{(B)}, ils peuvent être dans un état vitreux relativement rigide à la même température d'utilisation.

Comme les blocs C sont incompatibles avec le polymère fluoré, les blocs A et les blocs B, ils forment une phase discrète rigide à l'intérieur du matériau en formant des nanodomaines inclus dans le matériau et servant d'ancrages dans la zone d'une des extrémités de chaque bloc B. L'autre extrémité de chaque bloc B est relié à un bloc A qui possède une forte affinité avec le polymère fluoré. Cette forte affinité procure un second ancrage dans la zone de la seconde extrémité du bloc B.

Avantageusement, le bloc C est choisi parmi les homopolymères ou les copolymères du styrène ou de l'α-méthylstyrène.

Les triblocs qui contiennent des séquences dérivant d'(alkyl)acrylate d'alkyle peuvent notamment être préparés par polymérisation anionique par exemple selon les procédés décrits dans les demandes de brevet EP 524.054 et EP 749.987.

De préférence, le tribloc ABC est du Poly (méthyle méthacrylate-*b*-butadiène-*b*-styrène).

Le copolymère tribloc ABC peut contenir, comme produits secondaires de sa synthèse, un copolymère dibloc B-C et éventuellement de l'homopolymère C. Le copolymère tribloc ABC peut aussi contenir, comme produits secondaires de sa synthèse, un copolymère dibloc A-B et éventuellement de l'homopolymère A.

En effet, la synthèse d'un copolymère tribloc se fait préférentiellement en réunissant successivement le bloc A au bloc B puis au bloc C ou inversement le bloc C au bloc B puis au bloc A suivant la nature des trois blocs A, B et C. Le bloc A étant par définition celui qui est compatible avec le polymère fluoré. Le copolymère tribloc ABC peut aussi contenir des copolymères blocs linéaires symétriques ou en étoiles du type ABA ou CBC.

Avantageusement la quantité totale en poids des produits secondaires de synthèse c'est à dire de ces homopolymères A, C ou copolymères blocs AB, BC, ABA et CBC est inférieure à 2 fois la quantité de tribloc ABC. De préférence cette quantité est inférieure à une fois et mieux encore 0,5 fois la quantité de tribloc ABC. Plus précisément les produits secondaires sont essentiellement le dibloc BC, la quantité de BC peut être comprise entre 25 et 35 parties en poids pour respectivement 75 à 65 parties de ABC et est avantageusement d'environ 30 parties pour 70 parties de ABC.

La masse moléculaire moyenne en nombre (Mₙ) du copolymère tribloc, y compris les produits secondaires de synthèse, est supérieure ou égale à 20000 g.mol⁻¹, et de préférence comprise entre 50000 et 200000 g.mol⁻¹. Avantageusement le copolymère tribloc ABC, y compris les produits secondaires, est constitué de :
- 20 à 93 et de préférence de 30 à 70 parties en poids de séquences A,
- 5 à 68 et de préférence de 10 à 40 parties en poids de séquences B,
- 2 à 65 et de préférence de 5 à 40 parties en poids de séquences C.

La demanderesse a constaté que dans le cas des triblocs, les produits secondaires issus de la synthèse, tels que les diblocs ou les homopolymères, n'étaient pas préjudiciables aux propriétés mécaniques du mélange.

Avantageusement, le mélange du polymère fluoré, du produit électroconducteur et du copolymère tribloc ABC avec éventuellement les produits secondaires de la synthèse du tribloc contient en poids, le total étant 100%:
65 à 92% et avantageusement 70 à 85% de polymère fluoré,
5 à 25% et avantageusement 10 à 20% de produit électroconducteur,
3 à 15% et avantageusement 5 à 10% de copolymère triloc ABC.

Avantageusement, le mélange du polymère fluoré et du copolymère tribloc ABC a une viscosité à 230°C, pour un gradient de 100 s⁻¹ allant de 200 Pa.s à 4000 Pa.s. De préférence cette viscosité va de 300 Pa.s à 2000 Pa.s.

Avantageusement la composition de l'invention présente une résistivité volumique inférieure à 1.10⁶ Ω.cm et de préférence de 1.10⁵ à 1.10⁴ Ω.cm.

Avantageusement la composition de l'invention présente un module de flexion supérieure à 2000 Mpa et de préférence compris entre 2200 à 2600 Mpa.

Avantageusement, le mélange se caractérise en ce qu'il comprend du poly(difluorure de vinylidène) (PVDF) en tant que polymère fluoré, du noir de carbone et un copolymère tribloc poly(méthacrylate de méthyle)-poly(butadiène)-poly(styrène).

Les compositions de l'invention se préparent par mélange à l'état fondu du polymère fluoré et du tribloc ABC dans lequel on ajoute le produit électroconducteur. On utilise les techniques habituelles des thermoplastiques telles que par exemple par extrusion ou à l'aide de mélangeurs bivis.

### [Exemples]

Les exemples suivants illustrent la présente invention sans toutefois en limiter la portée.

### Exemple 1 (comparatif) :

### PVDF :

Le KYNAR® 720 est un homopolymère PVDF disponible sous forme de granulés ; sa température de fusion est de 170°C et sa viscosité mesurée avec un rhéomètre capillaire à 230°C et 100 s⁻¹ est comprise entre 750 et 1050 Pa.s.

### NOIR DE CARBONE:

Le noir de carbone choisi pour illustrer cet exemple est un noir vendu par la société MMM CARBON sous le nom ENSACO ® 250, ce noir présente une surface BET de 65m²/g une taille de particules primaire d'environ 40 nm et une taille d'aggrégat d'environ 300 à 600 nm.

3 mélanges contenant du PVDF Kynar® 720 et du noir de carbone sont préparés en utilisant un co-malaxeur BUSS. Le tableau 1 reprend les différents résultats obtenus en terme de choc charpy, choc multiaxial, module de flexion et résistivité, ainsi que les valeurs obenues pour le PVDF KYNAR® 720 seul.

**Tableau 1**

| PVDF-Noir de carbone (en poids) | Résistivité volumique (1)(Q.cm) | Choc charpy entaillé (2) (Kj/m²) | Choc multiaxial (3) (J/m²) | Module de flexion (4) (Mpa) |
|---|---|---|---|---|
| 88/12 | 7.10⁴ | 7 | 0,2 | 2290 |
| 85/15 | 6.10⁴ | 6 | 0,3 | 2350 |
| 82/18 | 6.10⁴ | 3,5 | 0,3 | 2470 |
| 100/0 | 1,.6.10¹⁵ | 11 | 0,3 | 1845 |

| | | | | |
|---|---|---|---|---|
| (1) Mesure de la résistivité volumique : Mesures à 23°C selon la norme CEI 93. Valeurs exprimées en Ω.cm. | | | | |
| (2) Norme ISO 179 1eA, barreaux de 80x10x4 mm injectés, température d'essai 23°C. | | | | |
| (3) Essais selon les prescription de la norme ISO 6603-2, plaque injectée 100x100x2, impacteur hémisphérique de dimaètre 20 mm, plaque bridée, vitesse d'impact 1 m/s, température d'essai 23°C. | | | | |
| (4) Norme ISO 178 :93, barreaux de 80x10x4 mm injectés, température d 'essai 23°C. | | | | |

### Exemple 2 (selon l'invention) :

### PVDF:

Le KYNAR® 720 est un homopolymère PVDF disponible sous forme de granulés ; sa température de fusion est de 170°C et sa viscosité mesurée avec un rhéomètre capillaire à 230°C et 100 s⁻¹ est comprise entre 750 et 1050 Pa.s.

### TRIBLOC :

Un tribloc désigné par PMMA-PB-PS, référencé T1 (32-34-34) a les caractéristiques suivantes : la masse moléculaire en nombre (Mn) des séquences PMMA est de 25400 g.mol⁻¹, la Mn des séquences PB est 27000 et celle des blocs PS est de 27000. Le bloc PMMA représente 32% en fraction massique de la masse totale du tribloc, le bloc PB représente 34% en fraction massique de la masse totale du tribloc, et le PS représente les 34% restants. C'est en fait un mélange d'un tribloc et de ses produits secondaires de synthèse. Il est préparé selon le mode opératoire décrit dans EP 524.054 ou dans EP 749.987.

### NOIR DE CARBONE:

Le noir de carbone choisi pour illustrer cet exemple est un noir vendu par la société MMM CARBON sous le nom ENSACO ® 250, ce noir présente une surface BET de 65m²/g une taille de particules primaire d'environ 40 nm et une taille d'aggrégat d'environ 300 à 600 nm.

4 mélanges contenant du PVDF Kynar® 720, du SBM T1 ainsi que du noir de carbone ENSACO 250 de la société MMM Carbon sont préparés en utilisant un co-malaxeur BUSS. Le tableau 2 reprend les différents résultats obtenus en terme de choc charpy, choc multiaxial, module de flexion et résistivité, ainsi que les valeurs obenues pour le PVDF KYNAR® 720 seul.

**Tableau 2**

| PVDF-Noir de carbone-SBM (en poids) | Résistivité volumique (1)(Ω.cm) | Choc charpy entaillé (2)(Kj/m²) | Choc multiaxial (3)(J/m²) | Module de flexion (4) (Mpa) |
|---|---|---|---|---|
| 82/12/6 | 1.10⁵ | 10 | 3,6 | 2290 |
| 79/12/9 | 1.10⁸ | 10 | 4,6 | 2240 |
| 76/15/9 | 7.10⁴ | 17 | 4 | 2320 |
| 73/18/9 | 6.10⁴ | 12 | 3,8 | 2390 |
| 100/0/0 | 1,.6.10¹⁵ | 11 | 0,2 | 1845 |

| | | | | |
|---|---|---|---|---|
| (1) Mesure de la résistivité volumique : Mesures à 23°C selon la norme CEI 93. Valeurs exprimées en Ω.cm. | | | | |
| (2) Norme ISO 179 1eA, barreaux de 80x10x4 mm injectés, température d'essai 23°C. | | | | |
| (3) Essais selon les prescription de la norme ISO 6603-2, plaque injectée 100x100x2, impacteur hémisphérique de diamètre 20 mm, plaque bridée, vitesse d'impact 1 m/s, température d'essai 23°C. | | | | |
| (4) Norme ISO 178 :93, barreaux de 80x10x4 mm injectés, température d 'essai 23°C. | | | | |

La Figure 1 nous permet de comparer les exemples 1 et 2 en terme de choc charpy entaillé en fonction du module de flexion (NDC signifie noir de carbone) :

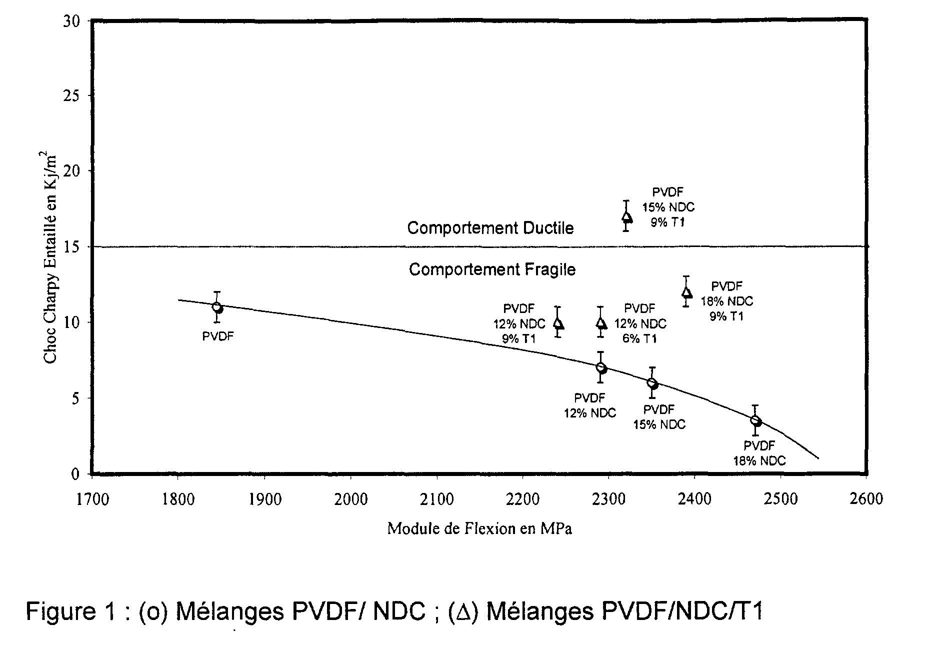

Le mélange contenant 76% de PVDF - 15% de noir de carbone - 9 % de T1 présente un caractère ductile lors de la rupture de l'échantillon.

## Revendications

1. Composition conductrice comprenant (i) un polymère fluoré, (ii) un produit électroconducteur et (iii) un copolymère tribloc ABC, les trois blocs A, B, et C étant reliés entre eux dans cet ordre, chaque bloc étant soit un homopolymère soit un copolymère obtenu à partir de deux ou plusieurs monomères, le bloc A étant relié au bloc B et le bloc B au bloc C au moyen d'une liaison covalente ou d'une molécule intermédiaire reliée à l'un de ces blocs par une liaison covalente et à l'autre bloc par une autre liaison covalente, et tel que :
- le bloc A est compatible avec le polymère fluoré,
- le bloc B est incompatible avec le polymère fluoré et est incompatible avec le bloc A,
- le bloc C est incompatible avec le polymère fluoré, le bloc A et le bloc B.

2. Composition selon la revendication 1 dans laquelle le polymère fluoré est un PVDF homopolymère ou copolymère.

3. Composition selon la revendication 1 ou 2 dans laquelle le produit électroconducteur est choisi parmi le graphite, le noir de carbone, les nanotubes de carbone et les fibres de carbone.

4. Composition selon la revendication 3 dans laquelle le produit électroconducteur est un noir de carbone ayant une surface d'adsorption azote inférieure à 500 m²/g.

5. Composition selon la revendication 4 dans laquelle la surface est inferieure à 100 m2/g.

6. Composition selon l'une quelconque des revendications précédentes dans laquelle le tribloc ABC est du Poly (méthyle méthacrylate-*b*-butadiène-*b*-styrène).

7. Composition selon l'une quelconque des revendications précédentes dans laquelle la masse moléculaire moyenne en nombre (Mn) du copolymère tribloc ABC est supérieure ou égale à 20000 g.mol⁻¹, et de préférence comprise entre 50000 et 200000 g.mol⁻¹.

8. Composition selon l'une quelconque des revendications précédentes dans laquelle les proportions sont en poids de:
65 à 92% de polymère fluoré,
5 à 25% de produit électroconducteur,
3 à 15% de copolymère triloc ABC.

9. Composition selon la revendication 8 dans laquelle les proportions sont en poids de:
70 à 85% de polymère fluoré,
10 à 20% de produit électroconducteur,
5 à 10% de copolymère triloc ABC.

10. Pièces fabriquées avec la composition de l'une quelconque des revendications précédentes et qui peuvent être des plaques, des films, des tubes, des joncs, des éléments de pompes centrifuges et des conteneurs.
